# EUROPEAN PATENT SPECIFICATION

(11) **EP 2 015 633 B1**
(45) Date of publication and mention of the grant of the patent: **06.04.2016**
(21) Application number: 07809036.2
(22) Date of filing: 03.05.2007
(51) Int. Cl.: A01N 25/02, A01N 39/02, A01M 7/00, A01P 13/00, A01P 3/00, A01P 7/04

(54) **A METHOD TO REDUCE SPRAY DRIFT DURING APPLICATION OF PESTICIDES AND CROP PROTECTION AGENTS**
VERFAHREN ZUR VERRINGERUNG DES SPRAY-DRIFTS WÄHREND DER AUSBRINGUNG VON PESTIZIDEN UND PFLANZENSCHUTZMITTELN
PROCÉDÉ PERMETTANT DE DE RÉDUIRE L'ENTRAÎNEMENT PAR LE VENT LORS DE L'APPLICATION DE PESTICIDES ET D'AGENTS DE PROTECTION DES CULTURES

(30) Priority: 03.05.2006 US 797097 P
(43) Date of publication of application: 21.01.2009
(73) Proprietor: Dow AgroSciences LLC, Indianapolis IN 46268-1054 (US); Mann, Richard, K., Franklin IN 46131 (US); Valcore, David, L., Carmel IN 46032 (US); Boucher, Raymond, E., Lebanon IN 46052 (US); Ogawa, Toshiya, Indianapolis IN 46254 (US); Haack, Alan, E., Roseville CA 95661 (US); Shatley, Deborah, G., Lincoln CA 95648 (US)
(72) Inventor: MANN, Richard, K., Franklin, IN 46131 (US); VALCORE, David, L., Carmel, IN 46032 (US); BOUCHER, Raymond, E., Lebanon, IN 46052 (US); OGAWA, Toshiya, Indianapolis, IN 46254 (US); HAACK, Alan, E., Roseville, CA 95661 (US); SHATLEY, Deborah, G., Lincoln, CA 95648 (US)
(74) Representative: Weickmann & Weickmann
(86) International application number: PCT/US2007/010734
(87) International publication number: WO 2007/130514

(56) References cited:
- WO-A-01/87068
- US-A- 5 945 377
- US-B1- 6 364 926
- US-B1- 6 797 673
- DATABASE WPI Week 198727 Derwent Publications Ltd., London, GB; AN 1987-189749 XP002465617 & JP 62 120301 A (HOKKO CHEM IND CO LTD) 1 June 1987 (1987-06-01)
- I. W. KIRK: "Spray mix adjuvants for spray drift mitigation" ASAE MEETING PAPER, [Online] no. AA03-003, 2003, pages 1-9, XP002465616 St. Joseph, Mich. Retrieved from the Internet: URL:http://apmru.usda.gov/Aerial/2003ASAE/ AA03-003Manu.pdf> [retrieved on 2008-01-22]
- H. Erdal Ozkan: "New nozzles for spray drift reduction", Fact Sheet AEX-523-98, 1 January 1998 (1998-01-01), pages 1-6, XP055057687, Retrieved from the Internet: URL:http://ohioline.osu.edu/aex-fact/0523. html [retrieved on 2013-03-25]

## Description

The present invention concerns a novel method to reduce spray drift during the application of agricultural chemicals by incorporating a monosaccharide or a mixture of monosaccharides into the liquid to be sprayed and by spraying the resulting liquid through a flat fan nozzle. Agricultural spraying by economical and available technologies uses hydraulic spray nozzles that inherently produce a wide spectrum of spray droplet sizes. A significant portion of spray droplets can be below 150 microns (µ) in diameter, which has been demonstrated in many field trials, wind tunnel testing and accepted math modeling to be drift-prone, i.e., many of the droplets are deposited significant distances off-target. Some herbicides have demonstrated very sensitive phytotoxicity to particular plant species at extremely low parts per million (ppm) or even parts per billion (ppb) levels, resulting in restricted applications around sensitive crops, orchards and residential plantings. For example, the California Dept of Pesticide Regulation imposes buffers of ½ - 2 miles (0.80-3.2 kilometers) for propanil containing herbicides applied aerially in the San Joaquin valley. Research has shown that commercially available drift retardants typically do not work with many aerially applied herbicide tank mixtures, due to pump shear, wind shear and other performance issues, which are more pronounced in high speed aerial application conditions. See Hewitt, A.J. (2003) Drift Control Adjuvants in Spray Applications: Performance and Regulatory Aspects. Proc. Third Latin American Symposium on Agricultural Adjuvants, Sao Paolo, ex-fact/0523.html)23-98

JP 62 120 301 A discloses the use of monosaccharides in the reduction of drift of agricultural dusts without specifying the used equipment.

US 5,945,377 discloses herbicidal compositions comprising monosaccharides to potentiate the effect of herbicides on weeds without decreasing the crop tolerance to weeds. Possible effects on spray drift reduction are not specified in this document.

The online publication "New nozzles for spray drift reduction" (H. Erdal Ozkan in Ohio State university AEX-523-98: http://ohioline.osu.edu/aex-fact/0523.html) discloses different nozzle constructions to reduce spray drift.

It has now been found that by incorporating a monosaccharide or mixture of monosaccharides into an agricultural spray mixture that spray drift during application can be reduced. The present invention concerns a method to reduce spray drift during the application of a pesticide which comprises a) incorporating into the pesticidal spray from about 0.1 to about 10 percent vol/vol of a monosaccharide or mixture of monosaccharides and b) spraying the resulting mixture through a flat fan (FF) or straight stream (SS) nozzle without a deflector. The reduction in spray drift may result from a variety of factors including a reduction in the production of fine spray droplets (<150 µ in diameter) and an increase in the volume median diameter (VMD) of the spray droplets.

The method to reduce spray drift applies to the application of any pesticide or crop protection agent including herbicides, fungicides and insecticides. Particularly preferred herbicides to which this method applies include cyhalofop-butyl, penoxsulam, flumetsulam, cloransulam-methyl, florasulam, pyroxsulam, diclosulam, fluroxypyr, clopyralid, acetochlor, triclopyr, isoxaben, 2,4-D, MCPA, MSMA, oxyfluorfen, oryzalin, trifluralin, aminopyralid, atrazine, piclorarn, tebuthiuron, pendimethalin, propanil and thiazopyr. Additional herbicides include 2,4-DB, acifluorfen, aclonifen, alachlor, amidosulfuron, aminotriazole, asulam, azimsulfuron, bensulfuron, bentazone, bispyribac-sodium, bromacil, bromoxynil, butachlor, butafenacil, butroxydim, cafenstrole, carfentrazone, chloridazon, chlorimuron, chlorsulfuron, cinidon-ethyl, cinosulfuron, clethodim, clodinafop, clomazone, cyanazine, cyclosulfamuron, cycloxydim, dicamba, dichlorprop, diclofop, diflufenican, diflufenzopyr, dimethachlor, dimethenamid, diquat, dithiopyr, diuron, ethalfluralin, ethofumesate, ethoxysulfuron, fenoxaprop, fentrazamide, flazasulfuron, fluazifop, flucarbazone, flufenacet, flufenpyr, flumiclorac-pentyl, flumioxazin, flupyrsulfuron, fomesafen, formasulfuron, fosamine, glufosinate, halosulfuron, haloxyfop, hexazinone, iodosulfuron, isoproturon, isoxaflutole, lactofen, linuron, MCPA-thioethyl, MCPB, mecoprop, mefenacet, mesosulfuron, mesotrione, metamitron, metazachlor, metolachlor, metosulam, metribuzin, metsulfuron, nicosulfuron, oxadiargyl, oxadiazon, oxasulfuron, oxazichlomefone, paraquat, phenmedipham, picloram, picolinafen, primisulfuron, profoxydim, propaquizafop, propoxycarbazone, propyzamide, prosulfuron, pyraflufen-ethyl, pyroxasulfone (KIH-485), pyrazolynate, pyrazosulfuron, pyribenzoxim, pyridate, pyriminobac-methyl, pyrithiobac, quinclorac, quinmerac, quizalofop, quizalofop-P-tefuryl, rimsulfuron, sethoxydim, simazine, sulcotrione, sulfentrazone, sulfometuron, sulfosate, sulfosulfuron, tefuryltrione (AVH-301), tembotrione (AE0172747) tepraloxydim, terbuthylazine, thifensulfuron, thiobencarb, topramezone, tralkoxydim, triasulfuron, tribenuron, trifloxysulfuron, triflusulfuron and tritosulfuron.

Particularly preferred insecticides to which this method applies include organophosphates such as chlorpyrifos, MAC's such as halofenozide, methoxyfenozide and tebufenozide, pyrethroids such as *gamma*-cyhalothrin and deltamethrin, and biopesticides such as spinosad and spinetoram. Additional insecticides include abamectin, acephate, acetamiprid, aldicarb, alpha-cypermethrin, bacillus thuringiensis, benfuracarb, bifenthrin, carbaryl, carbofuran, carbosulfan, cartap, chlorfenapyr, clothianidin, cyfluthrin, cypermethrin, diazinon, dichlorvos, dimethoate, emamectin, benzoote, endosulfan, esfenvalerate, fenitrothion, fipronil, flufenoxuron, indoxacarb, imidacloprid, *lambda-*cyhalothrin, lufenuron, malathion, methamidophos, methomyl, monocrotophos, novaluron, parathion-methyl, permethrin, phorate, profenophos, propargite, quinalphos, tefluthrin, terbufos, thiacloprid, thiametoxam, thiodicarb, triazophos, and *zeta*-cypermethrin.

Particularly preferred fungicides to which this method applies include mancozeb, myclobutanil, fenbuconazole, zoxamide, propiconazole, quinoxyfen and thifluzamide. Additional fungicides include azoxystrobin, benthiavalicarb, boscalid, captan, carbendazim, carboxin, carpropamid, chlorothalonil, copper fungicides, cyazofamid, cymoxanil, cyproconazole, cyprodinil, difenoconazole, dimethomorph, dinocap, epoxiconazole, ethaboxam, famoxadone, fenamidone, fenpropidin, fenpropimorph, fluazinam, fludioxonil, fluopicolide, fluoxastrobin, fluquinconazole, flusilazole, flutriafol, folpet, fosetyl, hexaconazole, iprodione, iprovalicarb, kresoxim-methyl, mandipropamid, maneb, meptyldinocap, metalaxyl, metconazole, metiram, metrafenone, orysastrobin, oxine-copper, picoxystrobin, probenazole, prochloraz, procymidone, propamocarb, propineb, prothioconazole, pyraclostrobin, pyrimethanil, spiroxamine, sulphur, tebuconazole, tetraconazole, thiophanate, thiram, triadimenol, tricyclazole, tridemorph, trifloxystrobin, zineb, and ziram.

Additional pesticides typically used as plant growth regulators to which this methodology applies include aminoethoxyvinyl glycine, chlormequat, cyclanilide, ethephon, flumetralin, flurprimidol, gibberellic acid, maleic hydrazide, mepiquat, paclobutrazol, prohexadione, thidiazuron, tributyl phosphorotrithioate and trinexapac-ethyl.

Monosaccharides used in the present invention are simple sugars, the best known of which are glucose, fructose, galactose and mannose. A particularly preferred and readily available mixture of monosaccharides useful in the method of the invention is invert sugar, a 50:50 mixture of glucose and fructose obtained by the hydrolysis of sucrose.

The monosaccharide or mixture of monosaccharides can be incorporated into the pesticidal spray by being tank-mixed directly with the diluted pesticidal formulation or by being provided as a pre-mix with the pesticidal formulation prior to dilution to the final spray volume. The monosaccharide or mixture of monosaccharides is incorporated at a concentration of about 0.1 to about 10 volume percent of the final spray volume.

The present method reduces off-target movement of the pesticide spray in both aerial and ground applications.

Narrow angle flat fan type nozzles, such as Spraying Systems Co. XR 4015 or 6515 series, or straight stream "jet" (plain orifice) type nozzles, such as Christopher Products CP-09 SS, are utilized in the present invention as opposed to deflector type nozzles.

### Example 1 Wind Tunnel Atomization

Aerodynamically engineered wind tunnels capable of uniform air velocities beyond the width of the nozzle spray plume are commonly used in the agricultural, forestry and other disciplines to accurately simulate atomizer performance and obtain droplet size results. The study utilized facilities and methods the US EPA has accepted for regulatory data (Hewitt, A.J. (1994) Measurement Techniques for Atomization Droplet Size Spectra Using Particle Size Analyzers in Wind Tunnels. SDTF Report T94-001, EPA MRID 43485603). The study was conducted under ASTM standards for laser diffraction drop size measurement and data reporting (ASTM E799 Standard Practice for Determining Data Criteria & Processing or Liquid Drop Size Analysis. American Soc. Testing & Materials, Race St., Philadelphia). Standard herbicide sprays containing cyhalofop plus crop oil were prepared according to label recommendations. Invert sugar as a 70% solution was added to the spray solutions which were well mixed. The solutions were applied through a Spraying Systems Co. XR 4015 or a Christopher Products CP-09 SS nozzle. The complete nozzle spray plume was traversed across the measurement laser beam for accurate data averaging. The methodology provides precise data with low percent standard deviation between replicates typically 3-4%

The results are summarized in Table 1.

**Table 1: Cyhalofop Atomization with & without Invert Sugar**

| Product | Invert Sugar Rate | Nozzle / Air speed (mph) | Spray V.M.D µ | % fines (% <150 µ) | Rel. Span Dv_{0.9}-Dv_{0.1}/ Dv_{0.5} |
|---|---|---|---|---|---|
| Aerial sprays | | | | | |
| Cyhalofop +AgriDex Crop oil | 0 | XR-4015/ 120 | 526 | 2.7 | 2.16 |
| Cyhalofop +AgriDex Cropoil | 8oz/10gal | XR-4015 / 120 | 587 | 1.9 | 1.86 |
| Cyhalofop +AgriDex Crop oil | 0 | CP-09 SS | 528 | 4.6 | 2.37 |
| Cyhalofop +AgriDex Crop oil | 6oz/10gal | CP-09 SS | 551 | 3.7 | 1.79 |

The results in Table 1 demonstrate the positive impact for reducing drift of spray droplets by increasing the VMD of the spray droplets by 11.6% and reducing the percentage of driftable fine droplets by 29.6% when invert sugar is added to the spray solution and Flat Fan XR-4015 nozzles are used to apply the solutions; and when using the CP-09-straight stream (SS) nozzles the VMD was increased by 4.4% and the percentage of driftable fine droplets was reduced by 19.6% when adding invert sugar to the spray solution.

## Claims

1. A method to reduce spray drift during the application of a pesticide which comprises a) incorporating into a pesticidal spray from 0.1 to 10 percent vol/vol of a monosaccharide or mixture of monosaccharides and b) spraying the resulting mixture through a flat fan or straight stream nozzle without a deflector.

2. The method of Claim 1 in which the pesticide is an herbicide.

3. The method of Claim 2 in which the herbicide is cyhalofop-butyl, penoxsulam, flumetsulam, cloransulam-methyl, florasulam, pyroxsulam, diclosulam, fluroxypyr, clopyralid, acetochlor, triclopyr, isoxaben, 2,4-D, MCPA, MSMA, oxyfluorfen, oryzalin, trifluralin, aminopyralid, atrazine, picloram, tebuthiuron, pendimethalin, propanil, thiazopyr, 2,4-DB, acifluorfen, aclonifen, alachlor, amidosulfuron, aminotriazole, asulam, azimsulfuron, bensulfuron, bentazone, bispyribac-sodium, bromacil, bromoxynil, butachlor, butafenacil, butroxydim, cafenstrole, carfentrazone, chloridazon, chlorimuron, chlorsulfuron, cinidon-ethyl, cinosulfuron, clethodim, clodinafop, clomazone, cyanazine, cyclosulfamuron, cycloxydim, dicamba, dichlorprop, diclofop, diflufenican, diflufenzopyr, dimethachlor, dimethenamid, diquat, dithiopyr, diuron, ethalfluralin, ethofumesate, ethoxysulfuron, fenoxaprop, fentrazamide, flazasulfuron, fluazifop, flucarbazone, flufenacet, flufenpyr, flumiclorac-pentyl, flumioxazin, flupyrsulfuron, fomesafen, formasulfuron, fosamine, glufosinate, halosulfuron, haloxyfop, hexazinone, iodosulfuron, isoproturon, isoxaflutole, lactofen, linuron, MCPA-thioethyl, MCPB, mecoprop, mefenacet, mesosulfuron, mesotrione, metamitron, metazachlor, metolachlor, metosulam, metribuzin, metsulfuron, nicosulfuron, oxadiargyl, oxadiazon, oxasulfuron, oxazichlomefone, paraquat, phenmedipham, picloram, picolinafen, primisulfuron, profoxydim, propaquizafop, propoxycarbazone, propyzamide, prosulfuron, pyraflufen-ethyl, pyroxasulfone (KIH-485), pyrazolynate, pyrazosulfuron, pyribenzoxim, pyridate, pyriminobac-methyl, pyrithiobac, quinclorac, quinmerac, quizalofop, quizalofop-P-tefuryl, rimsulfuron, sethoxydim, simazine, sulcotrione, sulfentrazone, sulfometuron, sulfosate, sulfosulfuron, tefuryltrione (AVH-301), tembotrione (AE0172747) tepraloxydim, terbuthylazine, thifensulfuron, thiobencarb, topramezone, tralkoxydim, triasulfuron, tribenuron, trifloxysulfuron, triflusulfuron or tritosulfuron.

4. The method of Claim 2 in which the herbicide is cyhalofop-butyl, penoxsulam, flumetsulam, cloransulam-methyl, florasulam, pyroxsulam, diclosulam, fluroxypyr, clopyralid, acetochlor, triclopyr, isoxaben, 2,4-D, MCPA, MSMA, oxyfluorfen, oryzalin, trifluralin, aminopyralid, atrazine, picloram, tebuthiuron, pendimethalin, propanil or thiazopyr.

5. The method of Claim 1 in which the pesticide is an insecticide.

6. The method of Claim 5 in which the insecticide is chlorpyrifos, halofenozide, methoxyfenozide, tebufenozide, *gamma*-cyhalothrin, deltamethrin, spinosad, spinetoram, abamectin, acephate, acetamiprid, aldicarb, alpha-cypermethrin, bacillus thuringiensis, benfuracarb, bifenthrin, carbaryl, carbofuran, carbosulfan, cartap, chlorfenapyr, clothianidin, cyfluthrin, cypermethrin, diazinon, dichlorvos, dimethoate, emamectin, benzoote, endosulfan, esfenvalerate, fenitrothion, fipronil, flufenoxuron, indoxacarb, imidacloprid, *lambda-*cyhalothrin, lufenuron, malathion, methamidophos, methomyl, monocrotophos, novaluron, parathion-methyl, permethrin, phorate, profenophos, propargite, quinalphos, tefluthrin, terbufos, thiacloprid, thiametoxam, thiodicarb, triazophos, or *zeta*-cypermethrin.

7. The method of Claim 5 in which the insecticide is chlorpyrifos, halofenozide, methoxyfenozide, tebufenozide, *gamma*-cyhalothrin, deltamethrin, spinosad or spinetoram.

8. The method of Claim 1 in which the pesticide is a fungicide.

9. The method of Claim 8 in which the fungicide is mancozeb, myclobutanil, fenbuconazole, zoxamide, propiconazole, quinoxyfen, thifluzamide, azoxystrobin, benthiavalicarb, boscalid, captan, carbendazim, carboxin, carpropamid, chlorothalonil, copper fungicides, cyazofamid, cymoxanil, cyproconazole, cyprodinil, difenoconazole, dimethomorph, dinocap, epoxiconazole, ethaboxam, famoxadone, fenamidone, fenpropidin, fenpropimorph, fluazinam, fludioxonil, fluopicolide, fluoxastrobin, fluquinconazole, flusilazole, flutriafol, folpet, fosetyl, hexaconazole, iprodione, iprovalicarb, kresoxim-methyl, mandipropamid, maneb, meptyldinocap, metalaxyl, metconazole, metiram, metrafenone, orysastrobin, oxine-copper, picoxystrobin, probenazole, prochloraz, procymidone, propamocarb, propineb, prothioconazole, pyraclostrobin, pyrimethanil, spiroxamine, sulphur, tebuconazole, tetraconazole, thiophanate, thiram, triadimenol, tricyclazole, tridemorph, trifloxystrobin, zineb, and ziram.

10. The method of Claim 8 in which the fungicide is mancozeb, myclobutanil, fenbuconazole, zoxamide, propiconazole, quinoxyfen or thifluzamide.

11. The method of Claim 1 in which the pesticide is a plant growth regulator.

12. The method of Claim 11 in which the plant growth regulator is aminoethoxyvinyl glycine, chlormequat, cyclanilide, ethephon, flumetralin, gibberellic acid, maleic hydrazide, mepiquat, paclobutrazol, prohexadione, thidiazuron, tributyl phosphorotrithioate or trinexapac-ethyl.

13. The method of Claim 1 in which monosaccharides or mixture of monosaccharides is invert sugar.

## Patentansprüche

1. Verfahren zum Verringern von Spritzmittelabdrift während der Anwendung eines Pestizids, umfassend a) Einbringen in eine pestizide Sprühformulierung von 0,1 bis 10 Prozent Vol/Vol eines Monosaccharids oder eines Gemischs von Monosachariden und b) Aussprühen des resultierenden Gemischs über ein Flachgebläse oder eine Vollstrahldüse ohne Deflektor.

2. Verfahren nach Anspruch 1, worin das Pestizid ein Herbizid ist.

3. Verfahren nach Anspruch 2, worin das Herbizid Cyhalofop-butyl, Penoxsulam, Flumetsulam, Cloransulam-methyl, Florasulam, Pyroxsulam, Diclosulam, Fluroxypyr, Clopyralid, Acetochlor, Triclopyr, Isoxaben, 2,4-D, MCPA, MSMA, Oxyfluorfen, Oryzalin, Trifluralin, Amonopyralid, Atrazin, Picloram, Tebuthiuron, Pendimethalin, Propanil, Thiazopyr, 2,4-DB, Acifluorfen, Aclonifen. Alachlor, Amidosulfuron, Aminotriazol, Asulam, Azimsulfuron, Bensulfuron, Bentazon, Bispyribac-Natrium, Bromacil, Bromoxynil, Butachlor, Butafenacil, Butroxydim, Cafenstrol, Carfentrazon, Chloridazon, Chlorimuron, Chlorsulfuron, Cinidon-ethyl, Cinosulfuron, Clethodim, Clodinafop, Clomazon, Cyanazin, Cyclosulfamuron, Cycloxydim, Dicamba, Dichlorprop, Diclofop, Diflufenican, Diflufenzopyr, Dimethachlor, Dimethenamid, Diquat, Dithiopyr, Diuron, Ethalfluralin, Ethofumesat, Ethoxysulfuron, Fenoxaprop, Fentrazamid, Flazasulfuron, Fluazifop, Flucarbazon, Flufenacet, Flufenpyr, Flumiclorac-pentyl, Flumioxazin, Flupyrsulfuron, Fomesafen, Formasulfuron, Fosamin, Glufosinat, Halosulfuron, Haloxyfop, Hexazinon, lodosulfuron, Isoproturon, Isoxaflutol, Lactofen, Linuron, MCPA-thioethyl, MCPB, Mecoprop, Mefenacet, Mesosulfuron, Mesotrion, Metamitron, Metazachlor, Metolachlor, Metosulam, Metribuzin, Metsulfuron, Nicosulfuron, Oxadiargyl, Oxadiazon, Oxasulfuron, Oxazichlomefon, Paraquat, Phenmedipham, Picloram, Picolinafen, Primisulfuron, Profoxydim, Propaquizafop, Propoxycarbazon, Propyzamid, Prosulfuron, Pyraflufen-ethyl, Pyroxasulfon (KIH-485), Pyrazolynat, Pyrazosulfuron, Pyribenzoxim, Pyridat, Pyriminobac-methyl, Pyrithiobac, Quinclorac, Quinmerac, Quizalofop, Quizalofop-P-tefuryl, Rimsulfuron, Sethoxydim, Simazin, Sulcotrion, Sulfentrazon, Sulfometuron, Sulfosat, Sulfosulfuron, Tefuryltrion (AVH-301), Tembotrion (AE0172747) Tepraloxydim, Terbuthylazin, Thifensulfuron, Thiobencarb, Topramezon, Tralkoxydim, Triasulfuron, Tribenuron, Trifloxysulfuron, Triflusulfuron oder Tritosulfuron ist.

4. Verfahren nach Anspruch 2, worin das Herbizid Cyhalofop-butyl, Penoxsulam, Flumetsulam, Chloransulam-methyl, Florasulam, Pyroxsulam, Diclosulam, Fluroxypyr, Clopyralid, Acetochlor, Triclopyr, Isoxaben, 2,4-D, MCPA, MSMA, Oxyfluorfen, Oryzalin, Trifluralin, Aminopyralid, Atrazin, Picloram, Tebuthiuron, Pendimethalin, Propanil oder Thiazopyr ist.

5. Verfahren nach Anspruch 1, worin das Pestizid ein Insektizid ist.

6. Verfahren nach Anspruch 5, worin das Insektizid Chlorpyrifos, Halofenozid, Methoxyfenozid, Tebufenozid, *gamma*-Cyhalotrin, Deltamethrin, Spinosad, Spinetoram, Abamectin, Acephat, Acetamiprid, Aldicarb, alpha-Cypermethrin, Bacillus thuringiensis, Benfuracarb, Bifenthrin, Carbaryl, Carbofuran, Carbosulfan, Cartap, Chlorfenapyr, Clothianidin, Cyfluthrin, Cypermethrin, Diazinon, Dichlorvos, Dimethoat, Emamectin, Benzoote, Endosulfan, Esfenvalerat, Fenitrothion, Fipronil, Flufenoxuron, Indoxacarb, Imidacloprid, *lambda*-Cyhalothrin, Lufenuron, Malathion, Methamidophos, Methomyl, Monocrotophos, Novaluron, Parathion-methyl, Permethrin, Phorat, Prophenophos, Propargit, Quinalphos, Tefluthrin, Terbufos, Thiacloprid, Thiametoxam, Thiodicarb, Triazophos oder *zeta*-Cypermethrin ist.

7. Verfahren nach Anspruch 5, worin das Insektizid Chlorpyriphos, Halofenozid, Methoxyfenozid, Tebufenozid, *gamma*-Cyhalothrin, Deltamethrin, Spinosad oder Spinetoram ist.

8. Verfahren nach Anspruch 1, worin das Pestizid ein Fungizid ist.

9. Verfahren nach Anspruch 8, worin das Fungizid Mancozeb, Myclobutanil, Fenbucanozol, Zoamid, Propiconazol, Quinoxyfen, Thifluzamid, Azoxystrobin, Benthiavalicarb, Boscalid, Captan, Carbendazim, Carboxin, Carpropamid, Chlorthalonil, Kupfer-Fungizide, Cyazofamid, Cymoxanil, Cyproconazol, Cyprodinil, Difenoconazol, Dimethomorph, Dinocap, Epoxiconazol, Ethaboxam, Famoxadon, Fenamidon, Fenpropidin, Fenpropimorph, Fluazinam, Fludioxonil, Fluopicolid, Fluoxastrobin, Fluquinconazol, Flusilazol, Flutriafol, Folpet, Fosetyl, Hexaconazol, Iprodion, Iprovalicarb, Kresoxim-methyl, Mandipropamid, Maneb, Meptyldinocap, Metalaxyl, Metconazol, Metiram, Metrafenon, Orysastrobin, Oxin-Kupfer, Picoxystrobin, Probenazol, Prochloraz, Procymidon, Propamocarb, Propineb, Prothiocaonazol, Pyraclostrobin, Pyrimethanil, Spiroxamin, Schwefel, Tebuconazol, Tetraconazol, Thiophanat, Thiram, Triadimenol, Tricyclazol, Tridemorph, Trifloxystrobin, Zineb und Ziram ist.

10. Verfahren nach Anspruch 8, worin das Fungizid Mancozeb, Myclobutanil, Fenbucanazol, Zoxamid, Propiconazol, Quinoxyfen oder Thifluzamid ist.

11. Verfahren nach Anspruch 1, worin das Pestizid ein Pflanzenwachstumsregulator ist.

12. Verfahren nach Anspruch 11, worin der Pflanzenwachstumsregulator Aminoethoxyvinylglycin, Chlormequat, Cyclanilid, Ethephon, Flumetralin, Gibberellinsäure, Maleinsäurehydrazid, Mepiquat, Paclobutrazol, Prohexadion, Thidiazuron, Tributylphosphorotrithioat oder Trinexapac-ethyl ist.

13. Verfahren nach Anspruch 1, worin Monosaccharide oder Gemische von Monosacchariden ein Invertzucker sind.

## Revendications

1. Procédé visant à réduire la dérive de pulvérisation lors de l'application d'un pesticide, qui comporte
a) le fait d'incorporer dans une formulation de pesticide à pulvériser un monosaccharide ou un mélange de monosaccharides, en une proportion de 0,1 à 10 % en volume,
b) et le fait de pulvériser le mélange résultant au moyen d'une buse à jet plat ou à jet droit, sans déflecteur.

2. Procédé conforme à la revendication 1, dans lequel le pesticide est un herbicide.

3. Procédé conforme à la revendication 2, dans lequel l'herbicide est l'un des suivants : cyhalofop-butyl, penoxsulame, flumétsulame, cloransulame-méthyle, florasulame, pyroxsulame, diclosulame, fluroxypyr, clopyralide, acétochlore, triclopyr, isoxabène, 2,4-D, MCPA, MSMA, oxyfluorfène, oryzaline, trifluraline, aminopyralide, atrazine, piclorame, tébuthiuron, pendiméthaline, propanil, thiazopyr, 2,4-DB, acifluorfène, aclonifène, alachlore, amidosulfuron, aminotriazole, asulame, azimsulfuron, bensulfuron, bentazone, bispyribac-sodium, bromacil, bromoxynil, butachlore, butafénacil, butroxydime, cafenstrole, carfentrazone, chloridazone, chlorimuron, chlorsulfuron, cinidon-éthyl, cinosulfuron, cléthodime, clodinafop, clomazone, cyanazine, cyclosulfamuron, cycloxydime, dicamba, dichlorprop, diclofop, diflufénican, diflufenzopyr, diméthachlore, diméthénamide, diquat, dithiopyr, diuron, éthalfluraline, éthofumésate, éthoxysulfuron, fénoxaprop, fentrazamide, flazasulfuron, fluazifop, flucarbazone, flufénacet, flufenpyr, flumiclorac-pentyl, flumioxazine, flupyrsulfuron, fomésafène, formasulfuron, fosamine, glufosinate, halosulfuron, haloxyfop, hexazinone, iodosulfuron, isoproturon, isoxaflutole, lactofène, linuron, MCPA-thioéthyl, MCPB, mécoprop, méfénacet, mésosulfuron, mésotrione, métamitrone, métazachlore, métolachlore, métosulame, métribuzine, métsulfuron, nicosulfuron, oxadiargyl, oxadiazon, oxasulfuron, oxazicloméfone, paraquat, phenmédiphame, piclorame, picolinafène, primisulfuron, profoxydime, propaquizafop, propoxycarbazone, propyzamide, prosulfuron, pyraflufène-éthyl, pyroxasulfone (KIH-485), pyrazolynate, pyrazosulfuron, pyribenzoxime, pyridate, pyriminobac-méthyl, pyrithiobac, quinclorac, quinmérac, quizalofop, quizalofop-P-téfuryl, rimsulfuron, séthoxydime, simazine, sulcotrione, sulfentrazone, sulfométuron, sulfosate, sulfosulfuron, téfuryltrione (AVH-301), tembotrione (AE0172747), tépraloxydime, terbuthylazine, thifensulfuron, thiobencarbe, topramézone, tralkoxydime, triasulfuron, tribénuron, trifloxysulfuron, triflusulfuron, tritosulfuron.

4. Procédé conforme à la revendication 2, dans lequel l'herbicide est cyhalofop-butyl, penoxsulame, flumétsulame, cloransulameméthyl, florasulame, pyroxsulame, diclosulame, fluroxypyr, clopyralide, acétochlore, triclopyr, isoxabène, 2,4-D, MCPA, MSMA, oxyfluorfène, oryzaline trifluraline, aminopyralide, atrazine, piclorame, tébuthiuron, pendiméthaline, propanil, ou thiazopyr.

5. Procédé conforme à la revendication 1, dans lequel le pesticide est un insecticide.

6. Procédé conforme à la revendication 5, dans lequel l'insecticide est l'un des suivants : chlorpyrifos, halofénozide, méthoxyfénozide, tébufénozide, gamma-cyhalothrine, deltaméthrine, spinosad, spinétorame, abamectine, acéphate, acétamipride, aldicarbe, alphacyperméthrine, bacillus thuringiensis, benfuracarb, bifenthrine, carbaryl, carbofuran, carbosulfan, cartap, chlorfénapyr, clothianidine, cyfluthrine, cyperméthrine, diazinon, dichlorvos, diméthoate, emamectine benzoate, endosulfan, esfenvalérate, fénitrothion, fipronil, flufénoxuron, indoxacarbe, imidaclopride, lambda-cyhalothrine, lufénuron, malathion, méthamidophos, méthomyl, monocrotophos, novaluron, parathion-méthyl, perméthrine, phorate, profénofos, propargite, quinalphos, téfluthrine, terbufos, thiaclopride, thiamétoxame, thiodicarb, triazophos, zêta-cyperméthrine.

7. Procédé conforme à la revendication 5, dans lequel l'insecticide est chlorpyrifos, halofénozide, méthoxyfénozide, tébufénozide, gamma-cyhalothrine, deltaméthrine, spinosad, ou spinétorame.

8. Procédé conforme à la revendication 1, dans lequel le pesticide est un fongicide.

9. Procédé conforme à la revendication 8, dans lequel le fongicide est l'un des suivants : mancozèbe, myclobutanil, fenbuconazole, zoxamide, propiconazole, quinoxyfène, thifluzamide, azoxystrobine, benthiavalicarbe, boscalide, captane, carbendazime, carboxine, carpropamide, chlorothalonil, fongicides au cuivre, cyazofamide, cymoxanil, cyproconazole, cyprodinil, difénoconazole, diméthomorphe, dinocap, époxiconazole, éthaboxame, famoxadone, fénamidone, fenpropidine, fenpropimorphe, fluaziname, fludioxonil, fluopicolide, fluoxastrobine, fluquinconazole, flusilazole, flutriafol, folpet, fosétyl, hexaconazole, iprodione, iprovalicarbe, krésoxime-méthyle, mandipropamid, manèbe, méptyldinocap, métalaxyl, métconazole, métirame, métrafénone, orysastrobine, oxine-cuivre, picoxystrobine, probénazole, prochloraze, procymidone, propamocarbe, propinèbe, prothioconazole, pyraclostrobine, pyriméthanil, spiroxamine, soufre, tébuconazole, tétraconazole, thiophanate, thirame, triadiménol, tricyclazole, tridémorphe, trifloxystrobine, zinèbe, zirame.

10. Procédé conforme à la revendication 8, dans lequel le fongicide est mancozèbe, myclobutanil, fenbuconazole, zoxamide, propiconazole, quinoxyfène, ou thifluzamide.

11. Procédé conforme à la revendication 1, dans lequel le pesticide est un agent de régulation de la croissance des végétaux.

12. Procédé conforme à la revendication 11, dans lequel l'agent de régulation de la croissance des végétaux est l'un des suivants : aminoéthoxyvinyl-glycine, chlorméquat, cyclanilide, éthéphon, flumétraline, acide gibbérellique, hydrazide maléique, mépiquat, paclobutrazole, prohexadione, thidiazuron, phosphorotrithioate de tributyle, trinexapac-éthyle.

13. Procédé conforme à la revendication 1, dans lequel le monosaccharide ou mélange de monosaccharides est du sucre inverti.
